Europäisches Patentamt

European Patent Office

Office européen des brevets

(19)

(11) Numéro de publication: **0 241 398**
**A1**

(12)

# DEMANDE DE BREVET EUROPEEN

(21) Numéro de dépôt: 87450003.6

(22) Date de dépôt: 24.02.87

(51) Int. Cl.⁴: **A 23 L 1/308**
A 23 L 1/212

(30) Priorité: 28.02.86 FR 8602963

(43) Date de publication de la demande:
14.10.87 Bulletin 87/42

(84) Etats contractants désignés:
AT BE CH DE ES FR GB GR IT LI LU NL SE

(71) Demandeur: **LABORATOIRES DE LUCHON**
**22 Bd Dardenne**
**F-31110 Luchon (FR)**

(72) Inventeur: **Lauly, Alain**
**22 Bd Dardenne**
**F-31110 Luchon (FR)**

(74) Mandataire: **Ravina, Bernard**
**Cabinet Bernard RAVINA 24, boulevard Riquet**
**F-31000 Toulouse (FR)**

(54) **Procédé d'obtention d'une poudre alimentaire, poudre alimentaire ainsi obtenue et produits alimentaires fabriqués à partir de la dite poudre et d'autres ingrédients.**

(57) La présente invention concerne un procédé d'obtention d'une poudre alimentaire, une poudre alimentaire ainsi obtenue et des produits alimentaires fabriqués à partir de la dite poudre et d'autres ingrédients.

Le procédé consiste à peler des tiges d'ananas, les sécher et les broyer pour obtenir une poudre de certaine granulométrie.

EP 0 241 398 A1

**Description**

PROCEDE D'OBTENTION D'UNE POUDRE ALIMENTAIRE, POUDRE ALIMENTAIRE AINSI OBTENUE ET PRODUITS ALIMENTAIRES FABRIQUES A PARTIR DE LA DITE POUDRE ET D'AUTRES INGREDIENTS

La présente invention est relative à un procédé pour préparer une poudre alimentaire, à la poudre obtenue par la mise en oeuvre du procédé et aussi à des produits alimentaires préparés à partir de la dite poudre et d'autres ingrédients.

Le but de la présente invention est de proposer le procédé d'obtentions d'une poudre alimentaire à utiliser, soit en l'introduisant dans la préparation de certains produits alimentaires, soit en la mélangeant avec d'autres produits alimentaires prêts à consommer.

Un autre but de l'invention est de proposer des produits alimentaires préparés à partir de la dite poudre et d'autres ingrédients. La poudre obtenue selon le présent procédé possède :
- une portion importante d'amidon,
- une portion importante de fibres végétales,
- une enzyme à effet digestif sur les protéines : la broméline.

L'existence de cette enzyme dans un produit alimentaire fini, dans lequel la dite poudre a été incorporée pendant la fabrication, est conditionnée par la température à laquelle cette enzyme est exposé pendant la dite fabrication.

En effet, la dite enzyme introduite pendant la fabrication avec la poudre dans un produit alimentaire exposé pendant sa fabrication à une température élevée, n'y reste pas intacte.

Dans ce cas, le produit alimentaire ne contient pas cette enzy me.

Les fibres végétales, comme il est connu, raccourcissent le temps de transit intestinal et peuvent être utiles dans le cas de constipation par obstruction ou dans le cas de contstipation atonique.

Il est bien connu aussi que prendre régulièrement des glucides à poids moléculaire élevé par exemple de l'amidon, aide à régulariser la glycémie dans le cas d'un sujet diabètique.

Un autre but de la présente invention est de produire une telle poudre à un coût peu élevé.

A cet effet et suivant une disposition de la présente invention, le procédé qui en fait partie, consiste essentiellement à peler des tiges d'ananas, les faire sécher et les broyer pour obtenir une poudre d'une granulométrie prédéterminée.

Le séchage pratiqué peut être effectué à une température basse pour ne pas détruire l'enzyme existante.

Il peut être aussi effectué à une pression réduite.

Suivant une autre disposition, la poudre alimentaire faisant partie de la présente invention se caractérise en ce qu'elle est préparée selon le procédé faisant lui aussi partie de la présente invention.

La présente invention sera mieux comprise à la lecture de la description détaillée ci-après.

Le procédé faisant partie de la présente invention, fait intervenir uniquement les tiges d'ananas comme matière première pour la production de la poudre alimentaire.

Ces tiges résultant de la culture d'ananas comme sous-produit, sont pelées, séchées puis broyées et enfin tamisées pour obtenir de la poudre d'une granulométrie prédéterminée.

Le broyage et le tamisage déterminent la granulométrie de la poudre à obtenir.

Cette granulométrie est à déterminer en fonction de l'usage de la poudre envisagé par la suite.

Si la poudre est destinée à être introduite dans la fabrication d'un produit alimentaire à utiliser pour diminuer le temps de transit intestinal, la longueur des fibres végétales doit être suffisamment grande pour favoriser cette diminution du temps de transit.

Cela veut dire que les granulés résultants du broyage et du tamisage doivent avoir une taille importante. Nos expériences ont montré que des granulés tamisés à l'aide d'un tamis dont les mailles sont comprises entre 100 et 900 micromètres environ, sont convenables pour ce genre d'applications. Si la grande taille de ces granulés est gênante pour la consistance de certains produits alimentaires dans lesquels la dite poudre est introduite, on utilise de la poudre dont les granulés sont de petite taille.

De la poudre de tige d'ananas, tamisée à l'aide d'un tamis dont les mailles ont une taille comprise entre 20 et 100 micromètres, peut être par exemple incorporée au chocolat pendant sa fabrication sans que l'existence de la dite poudre soit facilement décelable à la dégustation du dit chocolat; il est de même pour le yaourt, la confiture, le fromage, le sorbet et la glace.

le séchage doit être effectué à une température à déterminer selon que l'on veut garder ou non la dite enzyme dans la poudre produite.

Dans le cas où l'on veut garder cette enzyme intacte, le séchage doit être effectué à une température ne dépassant pas 70°C environ.

Pour accélérer le séchage tout en gardant la température basse, celui-ci peut être effectué à une pression réduite.

La poudre de tige d'ananas produite selon le procédé ci-dessus détaillé donne les résultats suivants à l'analyse :
- Humidité : 7,1 %
- Eléments minéraux : P 0,097 %
K 1,680 %
Ca 0,288 %

Mg 0,103 %
Cl 0,553 %
S 0,52 %
Na 0,008 %
Fe 224 ppm
Zn 7 ppm
Cu 3 ppm
Mn 63 ppm
- Protides : 4,47 %
- Lipides : 2,67 %
(extraction pendant 4 heures à l'hexane en soxhlet)
- Sucre:
. glucose : 2,26 %
. fructose : 1,51 %
. saccharose : 2,21%
- Amidon : 41,5 %
- Fibres (selon la méthode de Van Sost)

| | Cellulose | hemicellulose | Lignine | Résidu Mat. organique |
|---|---|---|---|---|
| Non traité | 9,4 | 20,9 | 2,1 | 1,3 |
| Délipidé | 9,5 | 21,2 | 2,3 | 1,0 |

PH à 10 % dans l'eau distillée 5

Activité enzymatique pour un séchage à 50° (maximum) sur un substrat de caseine à PH 7 à 35°C après activation par la cystéine = 1000 unités anson pour un gramme.

La poudre de tiges d'ananas telle qu'elle est produite selon le procédé faisant partie de la présente invention peut être, soit introduite dans la fabrication de certains produits alimentaires, par exemple le chocolat, le yaourt, la confiture, le fromage, le sorbet, la glace, le pain et tous produits semblables de boulangerie ou de viennoiserie les potages secs, soit ajoutée à d'autres produits alimentaires prêts à consommer par exemple les spaghetti, ceci avec le parmesan.

Dans le cas du chocolat, la dite poudre est ajoutée et mélangée intimement à froid (50°c max.) pendant la fabrication.

Sa granulométrie est de préférence de 60 micrométes environ.

Son séchage soit être effectué à moins de 50°C.

Du chocolat ainsi produit contient de la broméline.

Dans le cas du pain ou de produits semblables, l'enzyme contenue dans la poudre ajoutée est décomposée,en grande partie,sous l'effet de la chaleur de cuisson.

La poudre ajoutée doit avoir une granulométrie importante.

Une poudre tamisée à l'aide d'un tamis dont la taille de maille est de 600 micromètres environ, est convenable pour être introduite dans la panification.

Du pain ainsi fabriqué porte en lui même des fibres végétales non digérables qui aident à diminuer le temps de transit intestinal de ce pain.

La poudre alimentaire faisant partie de cette invention peut être ajoutée sur des produits alimentaires prêts à consommer.

De la poudre de tiges d'ananas séchée à basse température, c'est à dire de la poudre contenant de la broméline, peut être ajoutée sur certains plats prêts à consommer, ceci pour aider à faciliter la digestion des protéines contenues dans les dits plats au moins pendant la mastication et avant que l'enzyme elle-même soit digérée dans l'estomac.

Les fibres non digérables de la poudre des tiges d'ananas facilitent le passage d'aliments à travers les intestins. Ces fibres ne subissent pas de fermentation dans les intestins et par conséquent n'y provoquent pas de dégagement gazeux.

Il est à noter que l'apport en amidon porté par la dite poudre aide à régulariser la glycénie surtout chez des malades diabètiques.

Il est bien évident que d'autres applications alimentaires de la dite poudre peuvent être trouvées en se basant toujours sur ces caractéristiques ci-dessus détaillées.

Le procédé et les produits faisant l'objet de la présente invention peuvent recevoir toutes modifications connues et toutes améliorations techniquement ordinaires, sans pour autant sortir du cadre de la présente invention.

## Revendications

1. Procédé de préparation d'une poudre alimentaire à utiliser, soit en l'introduisant dans la préparation de certains produits alimentaires, soit en la mélangeant avec d'autres produits prêts à consommer, caractérisé en ce qu'il consiste à peler des tiges d'ananas, les faire sécher et les broyer pour obtenir une poudre d'une granulométrie prédéterminée.

2. Procédé selon la revendication 1 caractérisé en ce qu'un tamisage est effectué après le broyage pour contrôler la granulométrie de la poudre à produire.

3. Procédé selon la revendication 1 caractérisé en ce que le séchage est effectué à basse température et de préférence à une température n'exédant pas 70°C.

4. Procédé selon la revendication 1 caractérisé en ce que le séchage est effectué à basse pession.

5. Procédé selon les revendications 1, 2 et 3 caractérisé en ce qu'il consiste à :
- peler les tiges d'ananas,
- les couper,
- les sécher à une température ne dépassant pas 50°C,
- les broyer,
- les tamiser.

6. Procédé selon les revendications 1, 2, 3 et 4 caractérisé en ce qu'il consiste à :
- peler les tiges d'ananas,
- les couper,
- les sécher à une température ne dépassant pas 50°C et à basse pression,
- les broyer,
- les tamiser.

7. Poudre alimentaire caractérisée en ce qu'elle est préparée selon le procédé revendiqué dans une quelconque des revendications de 1 à 6.

8. Produits alimentaires caractérisés en ce qu'ils contiennent intimement de la poudre alimentaire revendiquée dans la revendication 7.

9. Produit alimentaire selon la revendication 8 caractérisé en ce qu'il contient comme ingrédient essentiel de la poudre de cacao, du lait , des fruits ou des légumes.

10. Produit alimentaire selon la revendication 8 caractérisé en ce qu'il contient comme un des ingrédients essentiels de la farine comme par exemple les produits de la boulangerie ou de la viennoiserie.

Office européen
des brevets

**RAPPORT DE RECHERCHE EUROPEENNE**

Numéro de la demande

EP 87 45 0003

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X,Y | US-A-4 267 196 (JOHNSTON)<br><br>* Revendications 9,24; colonne 1, lignes 35-39; colonne 2, lignes 65-68; colonne 3, lignes 16-20,38-45; colonne 4, lignes 23-46 * | 1,2,5-10 | A 23 L 1/308<br>A 23 L 1/212 |
| X,Y | US-A-4 431 677 (ALTOMARE et al.)<br>* Revendications 1-3,9; colonne 1, lignes 44-48,60-65 * | 1,2,5-10 | |
| A | US-A-4 379 782 (STAUB et al.)<br>* Revendication 1; colonne 2, lignes 18-25 * | 1-10 | |

DOMAINES TECHNIQUES
RECHERCHES (Int. Cl.4)

A 23 L

Le présent rapport de recherche a été établi pour toutes les revendications

| Lieu de la recherche | Date d'achèvement de la recherche | Examinateur |
|---|---|---|
| LA HAYE | 29-06-1987 | VAN MOER A.M.J. |